Europäisches Patentamt

European Patent Office

Office européen des brevets

(19)

(11) Numéro de publication: **0 093 655**

**A1**

(12) **DEMANDE DE BREVET EUROPEEN**

(21) Numéro de dépôt: **83400834.4**

(22) Date de dépôt: **27.04.83**

(51) Int. Cl.³: **B 29 G 1/00**

---

(30) Priorité: **30.04.82 FR 8207518**

(43) Date de publication de la demande:
**09.11.83 Bulletin 83/45**

(84) Etats contractants désignés:
**DE GB IT**

(71) Demandeur: **SOCIETE NOUVELLE DE ROULEMENTS S.A.**
**Boîte Postale 17 1, rue des Usines**
**F-74010 Annecy Cedex(FR)**

(72) Inventeur: **Peilloud, Fernand**
**Hery sur Alby**
**F-74540 Alby sur Cheran(FR)**

(72) Inventeur: **Cadoux, Raymond**
**Rue du Grand Essert**
**F-74000 Annecy le Vieux(FR)**

(72) Inventeur: **Dudragne, Gilles**
**6, rue Saint Paul Meythet**
**F-74000 Annecy(FR)**

(74) Mandataire: **Chassagnon, Jean-Alain et al,**
**REGIE NATIONALE DES USINES RENAULT**
**F-92109 Boulogne-Billancourt(FR)**

---

(54) **Procédé et dispositif de fabrication de matériaux composites organométalliques et notamment d'articles de friction.**

(57) Procédé de chauffage par induction pour la polymérisation de mélanges de poudres dites organo-métalliques constitués d'au moins une résine thermodurcissable, d'au moins une poudre métallique et pouvant également comprendre, généralement en moindre quantité, des additifs destinés à conférer des propriétés particulières d'usage au produit fini caractérisé en ce que le chauffage est généré au sein même du mélange à polymériser simultanément à une action de pressage de ladite poudre; ce pressage ayant pour conséquence de conférer à la poudre organo-métallique une bonne conductivité électrique.

Application à toute pièce constituée de poudre dite organo-métallique.

FIG.1

EP 0 093 655 A1

Croydon Printing Company Ltd.

Procédé et dispositif de fabrication de matériaux composites organo-métalliques et notamment d'articles de friction.

La présente invention se rapporte à un procédé et à un dispositif de fabrication de matériaux composites organo-métalliques et notamment d'articles de friction.

Dans l'état antérieur de la technique, la fabrication d'articles composés d'une matière plastique thermodurcissable et de charges fibreuses organiques ou minérales (à titre d'exemples non limitatifs : coton, bois, amiante, fibres synthétiques, verre, carbone) ainsi que de charges granulaires organiques ou minérales (à titre d'exemples non limitatifs : graphite, résine de cajou, sulfate de baryum, silice, alumine) comporte une phase de vulcanisation ou polymérisation de la résine thermodurcissable de liaison exécutée dans un moule constitué d'un matériau conducteur chauffé par une source thermique extérieure. La polymérisation est réalisée lors d'un pressage à chaud.

Les moyens de chauffage les plus utilisés sont par exemple de noyer un circuit de vapeur surchauffée ou une résistance électrique dans la masse du moule ou de chauffer les moules, contenant le produit à polymériser, dans un four. Le chauffage jusqu'à la température de polymérisation de la résine thermodurcissable intervient par conduction de la chaleur dans la masse du moule, par passage du flux thermique à l'interface moule-produit composite, puis par conduction de la chaleur dans la masse du composite organo-minéral.

Du fait du mode de transfert de la chaleur et des différentes masses à chauffer (moules et supports métalliques voisins), les pertes thermiques sont importantes. Du fait de la faible conductivité thermique des composites organo-minéraux, les temps de polymérisation de la résine thermodurcissable sont relativement longs.

On connaît par ailleurs un procédé de collage par induction des garnitures de friction qui consiste à chauffer par induction la plaque support de garniture, puis à serrer la garniture préalablement encollée contre cette plaque. Un perfectionnement de ce procédé, qui permet de limiter les pertes thermiques pendant le collage, a été décrit dans le brevet français 2 389 030. L'effet de chauffage par induction est, dans les dispositifs cités, toujours localisé dans le support métallique de la garniture.

L'utilisation de nouveaux composites organo-métalliques est d'autre part aujourd'hui bien connue. Ces produits, principalement composés de résines thermodurcissables et de fibres ou particules à base d'alliages de fer sont apparus dans la technologie des matériaux de friction en substitution aux produits constitués principalement de résines thermodurcissables et de fibres d'amiante.

L'un des éléments déterminants de cette évolution a été que les fibres d'amiante peuvent exercer une action nocive sur l'organisme humain. On admet aujourd'hui comme probable qu'elles peuvent être à l'origine de maladies professionnelles telles que l'asbestose ou de la silicose.

Ces nouveaux produits exempts d'amiante possèdent des caractéristiques physiques très différentes des produits traditionnels à base d'amiante. A notre connaissance, ils sont fabriqués avec des procédés et matériels traditionnels tels que ceux que nous avons précédemment cités.

L'objet de notre invention est de proposer un procédé et un moyen original de fabrication de ces nouvelles garnitures constituées principalement de résine thermodurcissable et de fibres à base d'alliages de fer. Ce procédé peut être étendu à la fabrication de toute pièce en matière plastique thermodurcissable dont la charge de renforcement est de nature métallique.

Pour supprimer les inconvénients énumérés auparavant, l'invention propose un dispositif de pressage à chaud qui permet d'éliminer une grande partie des pertes thermiques dues à l'échauffement des masses métalliques du moule et des pièces de support voisines. Le Le mode de chauffage retenu permet également de raccourcir considérablement le temps de polymérisation de la résine thermodurcissable contenue dans le mélange organo-métallique.

Dans ce but, l'invention propose un dispositif de chauffage par induction caractérisé en ce qu'il comprend au moins un inducteur plan logé ou noyé dans un poinçon de pressage dont la forme extérieure est aux formes et dimensions de la pièce à obtenir, au moins un moule dont l'empreinte est ajustée aux formes et dimensions du poinçon, de façon à permettre un guidage sans à coups du poinçon dans le moule et au moins une plaque de fermeture. L'inducteur plan est constitué d'un enroulement de conducteurs électriques refroidis par la circulation d'un liquide et d'un concentrateur de champ constitué de ferrites métalliques, il est susceptible d'être relié à une source de courant appropriée. Les poinçon, moule et plaque de fermeture sont réalisés en matériau non conducteur de l'éléctricité et peu conducteur de la chaleur ; résistant aux sollicitations mécaniques et thermiques imposées par l'opération de pressage à chaud.

Dans le cas de la fabrication de garnitures de friction, la plaque de fermeture comprend une empreinte en creux capable de recevoir et localiser une plaque support de garniture préalablement encollée.

Dans le cas plus général de moulage-pressage à chaud de pièces ne comportant pas d'éléments métalliques massifs collés, la plaque de fermeture comprend un concentrateur de champ magnétique constitué de ferrite métallique inséré sous la surface de ladite plaque de fermeture. La disposition que nous avons décrite permet de réaliser des plaques de matériau organo-métalliques planes.

Une disposition similaire comportant un inducteur circulaire inséré dans un moule à symétrie de révolution comprenant un poinçon de pressage et une plaque de fermeture ou deux poinçons de pressage permet la polymérisation sous pression des pièces de symétrie de révolution. L'ensemble des pièces en contact avec le mélange organo-métallique sont constituées d'un matériau résistant aux sollicitations mécaniques et thermiques imposées par l'opération de pressage à chaud.

Une disposition complémentaire permet de réaliser des pièces de révolution annulaires en insérant au noyau central en matériau tel que décrit pour le moule sur lequel viennent coulisser les poinçons de pressage.

Selon un autre aspect de notre invention, les dispositifs de chauffage sous pression décrits ci-dessus sont utilisés pour polymériser des composites organo-métalliques constitués principalement de résines thermodurcissables et d'une proportion de particules métalliques telle que le mélange pressé à froid sans polymérisation de la résine thermodurcissable soit conducteur de l'électricité.

A titre d'exemples non limitatifs et dans le cas particulier de la technologie des garnitures de friction, les poudres constituées de 10 à 20 % en poids de résine phénolique et de 50 à 80 % en poids de poudre fibreuse de fer ou d'alliages de fer, le solde à 100 % étant constitué d'additifs conducteurs ou non conducteurs, conviennent à l'application.

Selon un autre aspect de notre invention, le collage d'une plaque ou d'un élément métallique sur une des surfaces du matériau polymérisé est réalisé simultanément à l'opération de polymérisation du mélange organo-métallique. Conformément à l'invention, on utilise pour encoller le support métallique, une colle dont la température de polymérisation ou vulcanisation est identique à la température de polymérisation du mélange organo-métallique.

Grâce au dispositif décrit et grâce aux propriétés physiques de la poudre organo-métallique utilisée, le chauffage de la poudre constituée principalement de résine thermodurcissable et de particules métalliques s'effectue par le développement de courants de Foucault au sein de ladite poudre et lorsque les particules métalliques sont à base d'alliage de fer, par effet de dissipation du cycle d'hystérésis et par courants de Foucault.

D'autres caractéristiques et avantages de la présente invention seront mieux compris à la lecture de la description qui va suivre de modes de réalisation donnés à titre d'exemple et en se référant aux dessins annexés dans lesquels :

- la figure 1 est une vue schématique en élévation et en coupe du dispositif de pressage chauffage dans le but de réaliser un produit plat avec support métallique collé à l'une des faces dudit produit ;

- la figure 2 est une vue en plan de la figure 1, l'élément de fermeture étant retiré du montage ;

- la figure 3 est une vue schématique en élévation et en coupe du dispositif de pressage chauffage selon l'invention pour la réalisation de pièces sans support métallique ;

- la figure 4 est une vue schématique en élévation et en coupe du dispositif de pressage chauffage dans le but de réaliser un produit à symétrie de révolution plein ;

- la figure 5 est une vue schématique en élévation et en coupe d'une variante du dispositif représenté en figure 4, dans laquelle la plaque de base est remplacée par un deuxième poinçon ;

- la figure 6 est une vue schématique en élévation et en coupe d'une variante du dispositif représenté en figure 5, qui permet la réalisation de pièces annulaires.

Conformément à l'invention, le procédé de chauffage par induction, pour la polymérisation de mélanges de poudres dites organo- métalliques constitués d'au moins une résine thermodurcissable, d'au moins une poudre métallique et pouvant également comprendre, généralement en moindre quantité, des additifs destinés à conférer des propriétés particulières d'usage au produit fini, comprend les étapes suivantes :

1) Encollage d'un support métallique 7 à l'aide d'une colle thermodurcissable ;

2) Mise en place du support métallique 7 encollé sur la plaque de fermeture 3 ;

3) Fermeture du moule 2 à l'aide de la plaque de fermeture 3 comportant le support métallique encollé 7 ;

4) Remplissage du moule 2 par de la poudre 6 constituée principalement de résine thermodurcissable et de particules métalliques, le remplissage pouvant être effectué soit avec de la poudre 6 en vrac, soit avec un comprimé de cette poudre préalablement exécuté à froid.

5) Début du pressage de la poudre 6 dans le moule 2 par un poinçon 1.

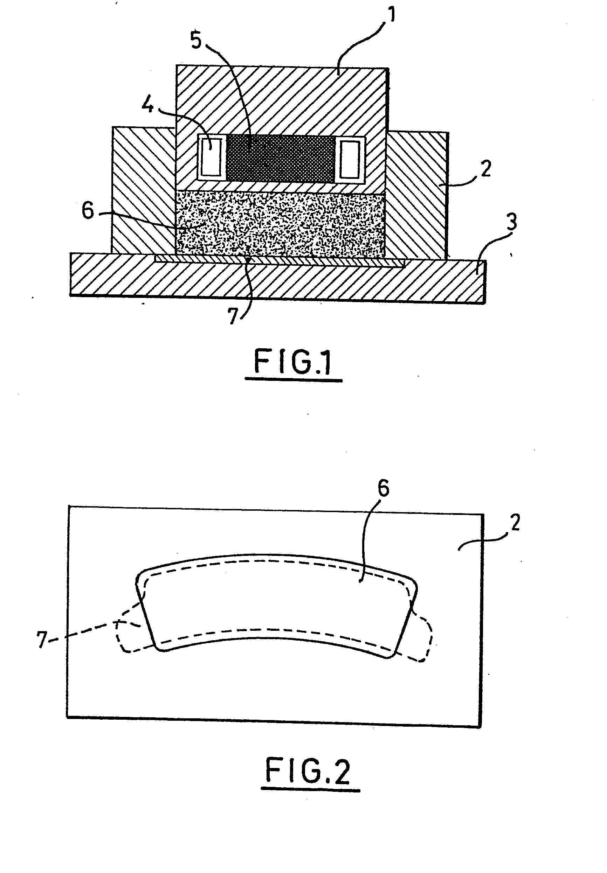

6) Continuation du pressage avec chauffage par induction ; le courant passe dans l'inducteur 4 constitué d'un conducteur creux pour permettre le refroidissement par un liquide approprié. Le concentrateur de champ 5 permet d'obtenir un rendement optimum de l'inducteur. La liaison de l'inducteur 4 au générateur de courant n'est pas représenté sur la figure 1. Le chauffage est maintenu jusqu'à atteindre la température de polymérisation de la résine thermodurcissable constitutive de la poudre et de la colle thermodurcissable déposée sur le support métallique.

7) Démoulage du produit constitué d'un support métallique 7 solidaire de la garniture 6 compressée et polymérisée.

Un mode de réalisation du dispositif selon l'invention pour la mise en oeuvre du procédé est représenté sur les figures 1 et 2 et comprend au moins un inducteur plan 4 logé ou noyé dans un poinçon de pressage 1 dont la forme extérieure est aux formes et dimensions de la pièce à obtenir, au moins un moule 2 dont l'empreinte est ajustée aux formes et dimensions du poinçon 1 de façon à permettre un guidage sans à coups du poinçon 1 dans le moule 2 et au moins une plaque de fermeture 3 ; l'inducteur plan 4 relié à un générateur de courant approprié étant constitué d'un enroulement de conducteurs électriques refroidis par la circulation d'un liquide et d'un concentrateur de champ magnétique 5 constitué de ferrites métalliques ; les poinçon 1, moule 2 et plaque de fermeture 3 étant construits en matériau non conducteur de l'électricité et peu conducteur de la chaleur, résistant aux sollicitations mécaniques et thermiques imposées par l'opération de pressage à chaud ; la plaque de fermeture 3 comprenant une empreinte en creux dirigée vers l'intérieur du moule capable de recevoir et localiser une plaque métallique massive 7 préalablement encollée d'une résine thermodurcissable.

Le procédé selon l'invention peut également être utilisé pour la réalisation de pièces sans support métallique 7. Dans ce cas, le procédé comporte les étapes suivantes :

1) Fermeture du moule 2 à l'aide de la plaque de fermeture 3 ;

2) Remplissage du moule 2 par de la poudre 6 constituée principalement de résine thermodurcissable et de particules métalliques, le remplissage pouvant être effectué soit avec de la poudre 6 en vrac, soit avec un comprimé de cette poudre préalablement exécuté à froid.

3) Début du pressage de la poudre 6 dans le moule 2 par le poinçon 1.

4) Continuation du pressage avec chauffage par induction par l'inducteur 4. Les concentrateurs de champ 5 et 8 permettent d'obtenir un rendement optimum de l'inducteur. Le chauffage est maintenu jusqu'à atteindre la température de polymérisation de la résine thermodurcissable constitutive de la poudre 6.

5) Démoulage du produit polymérisé.

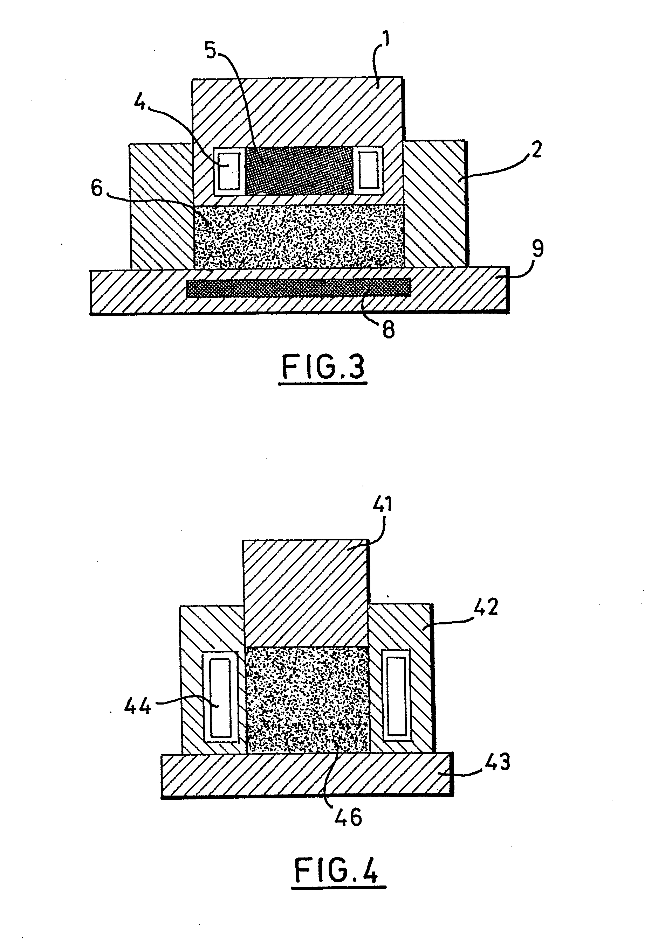

Un mode de réalisation du dispositif selon l'invention pour la mise en oeuvre de ce dernier procédé est représenté sur la figure 3 et comprend au moins un inducteur plan 4 logé ou noyé dans un poinçon de pressage 1 dont la forme extérieure est aux formes et dimensions de la pièce à obtenir, au moins un moule 2 dont l'empreinte est ajustée aux formes et dimensions du poinçon 1 de façon à permettre un guidage sans à coups du poinçon 1 dans le moule 2 et au moins une plaque de fermeture 9 ; l'inducteur plan 4 relié à un générateur de courant approprié étant constitué d'un enroulement de conducteurs électriques refroidis par la circulation d'un liquide et d'un concentrateur de champ magnétique 5 constitué de ferrites métalliques ; les poinçon 1, moule 2 et plaque de fermeture 9 étant construits en matériau non conducteur de l'électricité et peu conducteur de la chaleur, résistant aux sollicitations mécaniques et thermiques imposées par l'opération de pressage à chaud ; la plaque de fermeture 9 comprenant un concentrateur de champ magnétique 8 constitué de ferrites métalliques inséré sous la surface de ladite plaque de fermeture.

La figure 4 est une vue schématique en élévation et en coupe du dispositif de pressage chauffage dans le but de réaliser un produit à symétrie de révolution plein. Conformément à l'invention, l'inducteur 44 est inséré ou noyé dans le moule 42. Ce dispositif de chauffage par induction est caractérisé en ce qu'il comprend au moins un inducteur circulaire 44 relié à un générateur de courant approprié, inséré ou logé dans un moule 42 à symétrie de révolution, au moins un poinçon de pressage 41 coulissant dans ledit moule 42 et au moins une plaque de fermeture 43 ; les moule 42, poinçon 41 et plaque de fermeture 43 étant construits en matériau non conducteur de l'électricité et peu conducteur de la chaleur, résistant aux sollicitations mécaniques et thermiques imposées par l'opération de pressage à chaud. Ce dispositif est préférentiellement utilisé lorsque la longueur du produit fini à obtenir, mesuré sur l'axe de révolution, n'excède pas son diamètre.

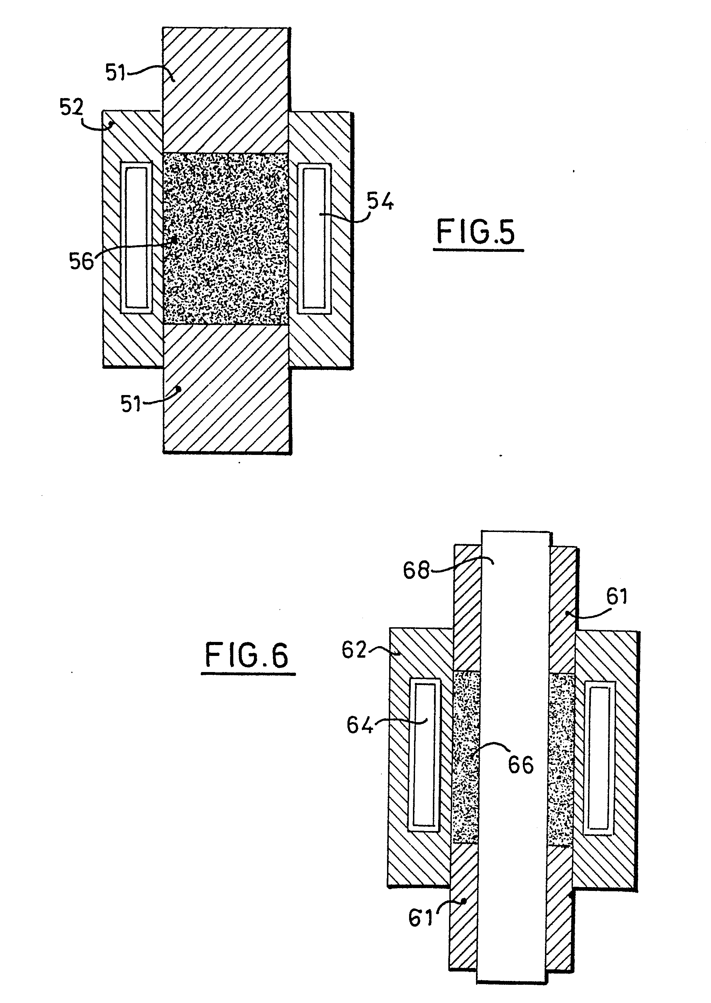

La figure 5 est une vue schématique en élévation et en coupe d'une variante du dispositif représenté en figure 4, dans laquelle la plaque de base 43 est remplacée par un deuxième poinçon. Ce dispositif de chauffage par induction est caractérisé en ce qu'il comprend au moins un inducteur circulaire 54 relié à un générateur de courant approprié, inséré ou logé dans un moule 52 à symétrie de révolution, au moins deux poinçons de pressage 51 coulissants dans ledit moule 52 ; les poinçons 51 et moule 52 étant construits en matériau non conducteur de l'électricité et peu conducteur de la chaleur, résistant aux sollicitations mécaniques et thermiques imposées par l'opération de pressage à chaud. Ce dispositif est préférentiellement utilisé lorsque la longueur du produit fini à obtenir, mesuré sur l'axe de révolution, excède son diamètre.

La présence d'un poinçon 1* en lieu et place d'une plaque de fermeture 3 permet d'exercer une compression dite "à double effet" sur la poudre 6. Cette compression à double effet permet d'obtenir une plus grande compacité donc une plus grande conductivité électrique de la poudre 6 avant chauffage.

La figure 6 est une vue schématique en élévation et en coupe d'une variante du dispositif représenté en figure 5, dans laquelle l'insertion d'un noyau 68 coulissant sur les poinçons permet la réalisation de pièces annulaires.

Ce dispositif de chauffage par induction est caractérisé en ce qu'il comprend un noyau central 68 permettant le coulissement du ou des poinçons 61 ; ledit noyau central 68 étant construit en matériau non conducteur de l'électricité et peu conducteur de la chaleur, résistant aux sollicitations mécaniques et thermiques imposées par l'opération de pressage à chaud.

Conformément, le procédé suivant l'invention pour les trois dispositifs représentés en figure 4, en figure 5 et en figure 6 comprend les étapes suivantes :

1) Fermeture du moule 2 à l'aide de la plaque de base 3 ou les poinçons 1* ;

2) Remplissage du moule 2 par de la poudre 6 constituée principalement de résine thermodurcissable et de particules métalliques, le remplissage pouvant être effectué soit avec de la poudre 6 en vrac, soit avec un comprimé de cette poudre préalablement exécuté à froid.

3) Pressage de la poudre 6 dans le moule 2 par les poinçons 1 et 1*.

4) Chauffage par induction par l'inducteur 4. Le chauffage est maintenu jusqu'à atteindre la température de polymérisation de la résine thermodurcissable constitutive de la poudre 6.

5) Démoulage du produit polymérisé.

Bien entendu, diverses modifications peuvent être apportées par l'homme de l'art aux dispositifs et procédés qui viennent d'être décrits uniquement à titre d'exemple, non limitatif, sans sortir du cadre de l'invention.

REVENDICATIONS

1. Procédé de chauffage par induction pour la polymérisation de mélanges de poudres dites organo-métalliques constitués d'au moins une résine thermodurcissable, d'au moins une poudre métallique et pouvant également comprendre, généralement en moindre quantité, des additifs destinés à conférer des propriétés particulières d'usage au produit fini, caractérisé en ce que le chauffage est généré au sein même du mélange à polymériser simultanément à une action de pressage de ladite poudre ; ce pressage ayant pour conséquence de conférer à la poudre organo-métallique une bonne conductivité électrique.

2. Procédé de chauffage par induction selon la revendication 1, caractérisé en ce que simultanément à la polymérisation du mélange de poudre organo-métallique est réalisé le collage d'une pièce métallique massive (7), préalablement encollée, sur l'une quelconque des surfaces du produit pressé (6) sans que cette opération ne constitue une opération distincte de la polymérisation du mélange de poudre organo-métallique.

3. Dispositif de chauffage par induction pour la mise en oeuvre du procédé selon la revendication 1, caractérisé en ce qu'il comprend au moins un inducteur plan (4) logé ou noyé dans un poinçon de pressage (1) dont la forme extérieure est aux formes et dimensions de la pièce à obtenir, au moins un moule (2) dont l'empreinte est ajustée aux formes et dimensions du poinçon (1) de façon à permettre un guidage sans à coups du poinçon (1) dans le moule (2) et au moins une plaque de fermeture (9) ; l'inducteur plan (4) relié à un générateur de courant approprié étant constitué d'un enroulement de conducteurs électriques refroidis par la circulation d'un liquide et d'un concentrateur de champ magnétique (5) constitué de ferrites métalliques ; les poinçon (1), moule (2) et plaque de fermeture (9) étant construits en matériau non conducteur de l'électricité et peu conducteur de la chaleur, résistant aux sollicitations mécaniques et thermiques imposées par l'opération de pressage à chaud ; la plaque de fermeture (9) comprenant un concentrateur de champ magnétique (8) constitué de ferrites métalliques inséré sous la surface de la dite plaque de fermeture.

4. Dispositif de chauffage par induction pour la mise en oeuvre du procédé selon la revendication 2, caractérisé en ce qu'il comprend au moins un inducteur plan (4) logé ou noyé dans un poinçon de pressage (1) dont la forme extérieure est aux formes et dimensions de la pièce à obtenir, au moins un moule (2) dont l'empreinte est ajustée aux formes et dimensions du poinçon (1) de façon à permettre un guidage sans à coups du poinçon (1) dans le moule (2) et au moins une plaque de fermeture (3) ; l'inducteur plan (4) relié à un générateur de courant approprié étant constitué d'un enroulement de conducteurs électriques refroidis par la circulation d'un liquide et d'un concentrateur de champ magnétique (5) constitué de ferrites métalliques ; les poinçon (1), moule (2) et plaque de fermeture (3) étant construits en matériau non conducteur de l'électricité et peu conducteur de la chaleur, résistant aux sollicitations mécaniques et thermiques imposées par l'opération de pressage à chaud ; la plaque de fermeture (3) comprenant une empreinte en creux dirigée vers l'intérieur du moule capable de recevoir et localiser une plaque métallique massive (7) préalablement encollée d'une résine thermodurcissable.

5. Dispositif de chauffage par induction selon l'une quelconque des revendications 1 ou 2, caractérisé en ce qu'il comprend au moins un inducteur circulaire (44) relié à un générateur de courant approprié, inséré ou logé dans un moule (42) à symétrie de révolution, au moins un poinçon de pressage (41) coulissant dans ledit moule (42) et au moins une plaque de fermeture (43) ; les moule (42), poinçon (41) et plaque de fermeture (43) étant construits en matériau non conducteur de l'électricité et peu conducteur de la chaleur, résistant aux sollicitations mécaniques et thermiques imposées par l'opération de pressage à chaud.

6. Dispositif de chauffage par induction selon l'une quelconque des revendications 1 ou 2, caractérisé en ce qu'il comprend au moins un inducteur circulaire (54) relié à un générateur de courant approprié, inséré ou logé dans un moule (52) à symétrie de révolution, au moins deux poinçons de pressage coulissants (51) dans ledit moule (52) ; les poinçons (51) et moule (52) étant construits en matériau non conducteur de l'électricité et peu conducteur de la chaleur, résistant aux sollicitations mécaniques et thermiques imposées par l'opération de pressage à chaud.

7. Dispositif de chauffage par induction selon l'une quelconque des revendications 5 ou 6, caractérisé en ce qu'il comprend un noyau central (68) permettant le coulissement du ou des poinçons (61) ; ledit noyau central (68) étant construit en matériau non conducteur de l'électricité et peu conducteur de la chaleur, résistant aux sollicitations mécaniques et thermiques imposées par l'opération de pressage à chaud.

0093655

## FIG.1

## FIG.2

FIG.3

FIG.4

FIG.5

FIG.6

Office européen
des brevets

**RAPPORT DE RECHERCHE EUROPEENNE**

## DOCUMENTS CONSIDERES COMME PERTINENTS

| Catégorie | Citation du document avec indication. en cas de besoin, des parties pertinentes | Revendication concernée | CLASSEMENT DE LA DEMANDE (Int. Cl. ³) |
|---|---|---|---|
| X | AU-B- 486 270 (McPHERSON)<br>* En entier; en part. page 3, ligne 10, revendications 1,12 * | 1-5 | B 29 G 1/00 |
| | --- | | |
| A | DE-C- 916 609 (TÖPKEN)<br>* Page 2, lignes 18-37 * | 1 | |
| | --- | | |
| A | FR-A-1 493 562 (TECALEMIT) | | |
| | ----- | | |

|  |
|---|
| **DOMAINES TECHNIQUES RECHERCHES (Int. Cl. ³)** |
| B 29<br>F 16 D |

Le présent rapport de recherche a été établi pour toutes les revendications

| Lieu de la recherche<br>LA HAYE | Date d'achèvement de la recherche<br>18-08-1983 | Examinateur<br>WELSCH H.R. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

 

& : membre de la même famille, document correspondant

OEB Form 1503 03.82